# EUROPÄISCHE PATENTSCHRIFT

(11) **EP 1 218 111 B1**
(45) Veröffentlichungstag und Bekanntmachung des Hinweises auf die Patenterteilung: **22.10.2003**
(21) Anmeldenummer: 00953100.5
(22) Anmeldetag: 27.07.2000
(51) Int. Cl.: B05D 5/08

(54) **HOCHTEMPERATURBESTÄNDIGER SCHICHTVERBUND**
HIGH TEMPERATURE-RESISTANT STRATIFIED COMPOSITE
COMPOSITE STRATIFIE RESISTANT AUX HAUTES TEMPERATURES

(30) Priorität: 29.07.1999 DE 19935721
(43) Veröffentlichungstag der Anmeldung: 03.07.2002
(73) Patentinhaber: RHENOTHERM Kunststoffbeschichtungs GmbH, 47906 Kempen (DE)
(72) Erfinder: Eigenbrod, Volkmar, 47804 Krefeld (DE)
(74) Vertreter: Bergen, Klaus, Dipl.-Ing.
(86) Internationale Anmeldenummer: EP0007215
(87) Internationale Veröffentlichungsnummer: WO01008815

(56) Entgegenhaltungen:
- DE-A- 3 628 670

## Beschreibung

### Technisches Gebiet

Die Erfindung betrifft einen hochtemperaturbeständigen Schichtverbund gemäß dem Oberbegriff des Hauptanspruches.

### Stand der Technik

Ein Schichtverbund der gattungsgemäßen Art ist aus der DE 36 28 670 C2 bekannt. Dort wird ein Metallsubstrat mit mehreren Lagen Fluorkunststoffen, wie beispielsweise Polytretrafluorethylen (PTFE), versehen. Damit wird das Metallsubstrat hochtemperaturbeständig und langfristig gegen aggressive Medien beständig und bietet der gattungsgemäße Schichtverbund sowohl einen Schutz vor Korrosion als auch vor chemischem Angriff. Die zu diesem Zweck zur Beschichtung vorgesehenen Fluorkunststoffe sind in besonders guter Weise für den Schutz gegen Chemikalien geeignet; sie bieten sowohl gegen starke Säuren als auch gegen Lösungsmittel gute Resistenz. Weiterhin zeichnen sie sich durch gute mechanische Eigenschaften aus. Sie haben sowohl eine hohe Abriebsfestigkeit als auch eine gute Elastizität und sind wegen ihrer hohen thermischen Beständigkeit gut für Beschichtungen geeignet.

Nachteilig ist es bei einer Beschichtung eines Grundsubstrats mit Fluorkunststoffen jedoch, daß diese nicht diffusionsdicht sind. Sie haben vielmehr eine Permeabilität, lassen also grundsätzlich Medien allmählich durch sich hindurchdringen. Hieraus ergeben sich bei der Versiegelung eines Grundsubstrates Probleme: Die Sicherstellung ausreichenden Schutzes des Grundsubstrates erfordert eine hinreichend dicke Schicht Fluorkunststoff, um ein Eindringen von aggressiven Medien bis zum Grundsubstrat zu verhindern. Daher ist es bekannt, die Schichten aus Fluorkunststoffen sehr dick auszuführen, wobei PTFE-Auskleidungen bis zu 6 mm realisiert werden.

Allerdings ist die Erhöhung der Schichtdicke nicht unbegrenzt möglich, abgesehen davon, daß dies auch mit wirtschaftlichen Nachteilen einhergeht: Bei Beschichtungen mit Schichtdicken über 1.000 µm erhöht sich die Gefahr der Spannungen in der Schicht, die bei der Sinterung und anschließenden Erstarrung des Fluorkunststoffs unvermeidlich sind. Diese Spannungen können zu Rissen führen, was natürlich die Qualität der Beschichtung sehr nachteilig beeinflußt sowie zu einer Verminderung der Haftung der Schicht auf dem Grundsubstrat führt.

### Darstellung der Erfindung

Der Erfindung liegt daher das Problem zugrunde, einen hochtemperaturbeständigen Schichtverbund der gattungsgemäßen Art derart weiterzuentwickeln, daß eine erhöhte Permeations- und Diffusionsdichtigkeit bei gleicher, gegebenenfalls sogar geringerer Schichtdicke gegeben ist. Der Schichtverbund soll also bei gleicher bzw. geringerer Schichtdicke - verglichen mit bekannten Beschichtungen z.B. gemäß DE-Patent 36 28 670 - eine erhöhte Resistenz gegen das Eindringen und Durchdringen aggressiver Medien haben.

Diese Aufgabe wird erfindungsgemäß durch die kennzeichnenden Merkmale des Hauptanspruchs gelöst, die gemäß den Unteransprüchen weitergebildet werden können.

Durch die Auswahl der ersten Schicht als Mischung aus PFA und FEP, die die beiden wesentlichen Bestandteile der Mischung sind, zusammengenommen also rund 100 Gewichtsprozent ergeben, und die Kombination mit der zweiten Schicht, bestehend weitgehend aus FEP, ergibt sich in überraschender Weise eine erstaunlich gute Resistenz des Schichtverbundes gegen das Eindringen von aggressiven Medien. Das Permeationsverhalten ist insoweit wesentlich verbessert, als daß aggressive Medien nur sehr viel schlechter den Verbund durchdringen.

Daß die beiden Anteile aus PFA und FEP die wesentlichen Bestandteile der Mischung für die erste Schicht darstellen, ist so zu verstehen, daß diese beiden Komponenten zusammen weitgehend 100 Gewichtsprozent ausmachen, wobei allerdings vorgesehen sein kann - was insbesondere aus der nachfolgenden weiteren Beschreibung klar werden wird -, daß noch spezielle Additive der Mischung zugegeben werden.

Gemäß einer ersten Weiterbildung ist vorgesehen, daß zwischen der ersten Schicht und der zweiten Schicht mindestens eine weitere Schicht aus einer Mischung aus PFA und FEP angeordnet ist, wobei wieder PFA mit einem Anteil von 20 bis 80 Gewichtsprozent und FEP mit einem Anteil von 80 bis 20 Gewichtsprozent zur Anwendung kommt, so daß die beiden Anteile aus PFA und FEP die wesentlichen Bestandteile der Mischung ausmachen. Weiterhin kann vorgesehen werden, daß auf der zweiten Schicht mindestens eine weitere Schicht aus FEP angeordnet ist.

Es hat sich weiterhin herausgestellt, daß das Permeationsverhalten des Schichtverbundes besonders vorteilhaft verändert wird, wenn mindestens eine der Schichten zusätzlich mit hochbeständigen, anorganischen Additiven (K, G) versehen wird. Hierunter sind insbesondere Kohlenstoff-Fasern (K) und/oder Glasflocken (Glasflakes G) und/oder Micaflakes (Glimmerkristalle) zu verstehen.

Die Kohlenstoff-Fasern (K) sind dabei zwischen 50 und 500 µm, vorzugsweise zwischen 100 und 200 µm, lang und haben einen Durchmesser von 5 bis 50 µm, vorzugsweise von 10 bis 15 µm. Die Glasflocken (Glasflakes G) können eine Dicke von 2 bis 30 µm, vorzugsweise von 5 bis 10 µm, haben und einen Durchmesser von 10 bis 100 µm, vorzugsweise von 30 bis 50 µm, aufweisen. Die Micaflakes können indes eine Dicke von 1 bis 20 µm, vorzugsweise von 2 bis 10 µm, und einen Durchmesser von 20 bis 300 µm, vorzugsweise von 50 bis 150 µm, haben.

Bevorzugt wird gemäß einer speziellen Ausführung der Erfindung das hochbeständige, anorganische Additiv in Form von Kohlenstoff-Fasern (K) nur der ersten Schicht oder den weiteren Schichten aus einer Mischung aus PFA und FEP beigegeben. Weiterhin kann vorgesehen werden, daß das hochbeständige, anorganische Additiv in Form von Glasflocken (Glasflakes G) und/oder Micaflakes nur der zweiten Schicht oder den weiteren Schichten aus FEP beigegeben wird. Es kann aber auch vorgesehen sein, daß mindestens eine Schicht sowohl mit Kohlenstoff-Fasern (K) als auch mit Glasflocken (Glasflakes G) bzw. Micaflakes versehen ist.

Weiterhin kann die oberste Schicht des Schichtverbundes mit Pigmenten (P) versehen sein, die in einer Menge von 0,5 bis 5 Gewichtsprozent beigegeben werden können.

Das Grundmaterial wird vorteilhafterweise vor dem Aufbringen der ersten Schicht einer Sandstrahl- und/oder Flammspritzbehandlung unterzogen. Zur Verbesserung der Haftung des Schichtverbundes auf dem Grundmaterial ist vorgesehen, daß auf das Grundmaterial vor dem Aufbringen der ersten Schicht ein Primer (Pr) aufgebracht wird. Dieser kann vorzugsweise aus einer Schicht aus Polytretrafluorethylen (PTFE) bestehen.

### Gewerbliche Anwendbarkeit

Durch die erfindungsgemäße Ausgestaltung des Schichtverbundes werden folgende Vorteile erzielt:
- Zunächst ist der Schichtverbund hinsichtlich des Eindringens von aggressiven Materialien wesentlich weniger durchlässig als vorbekannte Beschichtungen. Damit erzielt der erfindungsgemäße Verbund ein Höchstmaß an Sicherheit in aggressiven Umgebungen, insbesondere auch bei hohen Temperaturen. Die Lebensdauer des Schichtverbundes ist in bekannter Weise aufgrund der guten mechanischen Eigenschaften von Fluorkunststoffen hoch.
- Die Schichten brauchen zum Erreichen ausreichender Dichtigkeit gegen aggressive Medien nicht mehr so dick wie vorbekannte Schichten zu sein. Damit wird die Gefahr der Rißbildung reduziert. Weiterhin verbessert sich die Haftung der Schichten auf dem Grundsubstrat.
- Da die Schichtdicke relativ klein gehalten werden kann, treten in den einzelnen Schichten auch keine nennenswerten mechanischen Spannungen auf, so daß die Festigkeit verbessert ist.
- Durch die spezielle Mischung aus FEP und PFA wird der Schmelzpunkt der Mischung so verändert, daß eine besonders einfache Verarbeitung der Mischung beim Auftrag auf eine Trägerschicht ermöglicht wird.

### Kurze Beschreibung der Zeichnungen

Anhand der Zeichnungen, in denen ein Ausführungsbeispiel der Erfindung dargestellt ist, wird diese näher erläutert. Es zeigen:
- Fig. 1: schematisch einen Schnitt durch den erfindungsgemäßen Schichtverbund;
- Fig. 2 u.3: das Schmelzverhalten der Mischung aus FEP/PFA;
- Fig. 4: den Verlauf der Schmelzpunkte über der Temperatur für unterschiedliche Mischungsverhältnisse; und
- Fig. 5: den Verlauf der Kristallbildung über der Zeit für verschiedene Mischungsverhältnisse.

### Wege zur Ausführung der Erfindung

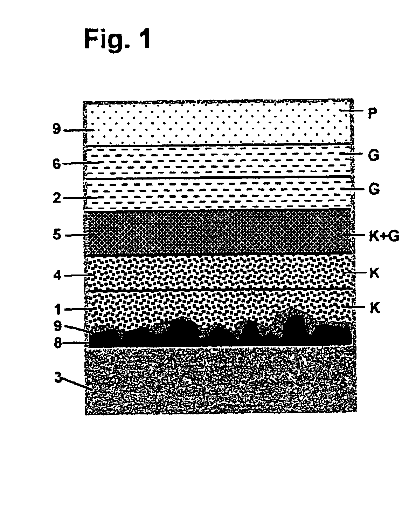

In Fig. 1 ist ein vergrößerter Schnitt durch eine Ausführung des erfindungsgemäßen Schichtaufbaus zu sehen. Eine metallische Grundschicht 3 soll hitzebeständig beschichtet werden, so daß sie zum einen bei hohen Temperaturen und zum anderen auch in chemisch aggressiver Umgebung eingesetzt werden kann.

Vor der Beschichtung wird die Oberfläche des Metalls 3 zunächst gereinigt, namentlich fettfrei gemacht, wobei sie sandgestrahlt und/oder flammgespritzt werden kann. Die flammgespritzte Schicht ist in Fig. 1 mit 8 bezeichnet. Auf diese Schicht kann zunächst ein Primer 9 aufgebracht werden, der die ausreichende Haftung der weiterhin aufzubringenden Schichten auf dem Grundsubstrat 3 gewährleistet.

Auf die so behandelte und vorbeschichtete Oberfläche des Grundmaterials 3 wird dann erfindungsgemäß eine erste Schicht 1 aufgebracht, die aus einer Mischung aus PFA und FEP besteht.

Das PFA hat dabei einen Anteil von 20 bis 80 Gewichtsprozent, FEP einen entsprechenden Anteil von 80 bis 20 Gewichtsprozent; die beiden Anteile aus PFA und FEP sind dabei die wesentlichen Bestandteile der Mischung, abgesehen von geringfügigen Beimischungen.

PFA ist eine Mischung aus Tetrafluorethylen mit einem Anteil von 92,0 bis 99,5 Gewichtsprozent und Fluorvenylether mit einem Anteil von 8,0 bis 0,5 Gewichtsprozent. FEP ist ein Tetrafluorethylen/Hexafluorpropylen-Copolymerisat.

Das Copolymer aus Tetrafluorethylen und Fluorvenylether (im folgenden PFA genannt) weist einen Schmelzpunkt von 302 bis 310°C auf.

Der Schmelzpunkt des zum Einsatz kommenden Tetrafluorethylen/Hexafluorpropylen-Copolymerisat liegt zwischen 250 und 290°C bei einem Hexafluorpropylengehalt von 18 bis 25 Gewichtsprozent.

Die erste Schicht kann - da sie aus einem thermoplastischen Material besteht - in einfacher Weise dadurch aufgebracht werden, daß das Material in Pulverform mit elektrostatischer Pulverpistole oder als Dispersion mit Farbspritzpistolen auf die zu beschichtende Oberfläche aufgebracht und anschließend im Ofen gesintert wird. Beim Erkalten der Schicht erstarrt der Thermoplast und es bildet sich eine homogene Schicht auf dem Grundmaterial 3 aus. Einzelheiten zu dieser Technologie sind in der DE 36 28 670 C2 beschrieben und brauchen daher hier nicht weiter vertieft zu werden.

Auf die erste Schicht 1 können weitere im wesentlichen gleiche Schichten 4 und 5 aufgebracht werden, die ebenfalls aus einer Mischung aus PFA und FEP bestehen, wobei PFA wieder mit einem Anteil von 20 bis 80 Gewichtsprozent und FEP mit einem Anteil von 80 bis 20 Gewichtsprozent verwendet wird. Das Aufbringen mehrerer gleicher Schichten stellt verfahrensmäßige Vorteile dar, da mehrere jeweils dünne Schichten leichter aufzubringen sind als eine dicke.

Wesentlich ist, daß auf die so aufgebrachte Schicht bzw. Schichten aus der PFA/FEP-Mischung nunmehr eine weitere Schicht 2 aus weitgehend reinem FEP aufgebracht wird. Allerdings können dieser Schicht - so wie auch den bisher aufgebrachten - gewisse Additive, auf die nachfolgend noch eingegangen wird, beigegeben sein. Auch auf diese Schicht 2 können weitere Schichten 6 und 7 aus weitgehend reinem FEP aufgetragen werden.

Zur Verbesserung der thermischen Flexibilität und Stabilität sind insbesondere der ersten Schicht 1, aber auch den Schichten 4 und 5, hochbeständige, anorganische Additive in Form von Kohlenstoff-Fasern K beigegeben. Diese an sich bekannten Fasern armieren die Schicht und verleihen ihr eine erhöhte Festigkeit. Damit wird erreicht, daß Spannungsrisse weitgehend vermieden werden können. Solche Risse entstehen ansonsten nämlich leicht, wenn das aufgebrachte Schichtmaterial nach dem Sintern abkühlt, damit kontrahiert (determiniert durch den Wärmeausdehnungskoeffizienten) und Spannungen im Material erzeugt. Durch die Beigabe von Kohlenstoff-Fasern werden die Spannungen besser aufgenommen, so daß die Gefahr der Rißbildung minimiert ist (der relative große Wärmeausdehnungskoeffizient des Fluorkunststoffs wird durch die Füllung des Materials mit Kohlenstoff-Fasern reduziert).

Die Kohlenstoff-Fasern K bestehen aus hochreinem Kohlenstoff und sind vorzugsweise 100 bis 200 µm lang, wobei sie einen bevorzugten Durchmesser von 10 bis 15 µm haben. Durch deren Beigabe in die Schicht wird die chemische Beständigkeit der Schicht nicht beeinträchtigt. Weiterhin ist die Haftung des Fluorthermoplasts auf dem Grundmaterial verbessert, da die unterschiedlichen Ausdehnungskoeffizienten von Grundmaterial (Metall) und Fluorkunststoff durch die Füllung angenähert werden.

Die zweite Schicht 2 und gegebenenfalls weiteren Schichten sind mit Glasflocken (Glasflakes) G und/oder Micaflakes gefüllt. Diese Partikel verleihen der Schicht vorteilhafte Eigenschaften. Glasflocken und Micaflakes erhöhen nämlich die mechanische und thermische Festigkeit der Schicht, sie verringern jedoch vor allem die Permeabilität, indem sie den Permeationsweg verlängern, da die den eindringenden aggressiven Medien immer wieder "den Weg versperren". Es kann eine Zugabe von Glasflocken und/oder Micaflakes von 5 bis 25 Gewichtsprozent in die jeweilige Schicht erfolgen. Die Glasflakes sind bevorzugt 5 bis 10 um dick und haben einen Durchmesser von 30 bis 50 um; die Micaflakes haben vorzugsweise eine Dicke von 2 bis 10 µm und einen Durchmesser bis zu 150 µm.

Die Glasflocken G erhöhen die mechanische und thermische Festigkeit wie die Kohlenstoff-Fasern K, sie verringern vorteilhafterweise jedoch die Permeabilität der Schicht. Die Glasflocken bestehen vorzugsweise aus C-Glas, d. h. aus chemisch hoch beständigem Glas.

Vorzugsweise der obersten Schicht 7 können Pigmente P beigemischt werden. Dadurch wird nicht nur erreicht, daß die Oberfläche des Schichtverbundes eine optisch gute Erscheinung hat (Farbe); überraschenderweise ergibt sich damit auch eine positiv veränderte kristalline Struktur des FEP. Die regelmäßige, "geleehafte" Struktur verändert sich in eine amorphe, unregelmäßige, kristalline Struktur. Auch das Permeationsverhalten verbessert sich damit deutlich. Das Pigment P wird bevorzugt in einer Menge von 0,5 bis 5 Gewichtsprozent in die Schicht 7 zugemischt.

Die Pigmente P wirken abhängig von ihrer Auswahl als Hitzestabilisatoren oder machen je nach Bedarf die Schicht auch elektrisch leitfähig. Sie geben der Schicht auch eine einheitliche Färbung.

Der in Figur 1 dargestellte Schichtverbund stellt eine bevorzugte Ausführungsform der Erfindung dar. Auf der metallischen Grundschicht 3 ist nach Sandstrahlen und Flammspritzen - s. Schicht 8 - ein Primer 9 in Form einer Schicht PTFE aufgebracht. Hierauf wird vorzugsweise gemäß der Beschichtungstechnologie nach der DE 36 28 670 C2 eine erste Schicht 1 aufgebracht, in die Kohlenstoff-Fasern K eingebracht wurden; die Schicht selber ist eine Mischung aus PFA und FEP. Anschließend wird eine weitere Schicht 4 derselben Zusammensetzung aufgebracht. Auf die Oberfläche dieser Schicht 4 wird eine weitere Schicht 5 aufgetragen, die ebenfalls aus einer Mischung aus PFA und FEP besteht. In diese sind jedoch nunmehr sowohl Kohlenstoff-Fasern K als auch Glasflocken G (oder Micaflakes) eingebracht.

Auf die Schicht 5 wird dann die Schicht 2 aufgetragen, die aus FEP besteht und in die Glasflocken G (oder Micaflakes) eingebracht sind. Es schließt sich die Schicht 6 mit derselben Zusammensetzung an. Schließlich wird die Schicht 7 als Abschlußschicht aufgebracht, die aus FEP besteht und in die Pigmente P eingelagert sind.

Durch die Wahl namentlich der Zusammensetzung der Schichten 1, 4 und 5, nämlich FEP und PFA im Verhältnis von 1 zu 4 bis 4 zu 1, wird im Zusammenwirken mit den eingelagerten Kohlenstoff- bzw. Glasfasern eine äußerst geringe Permeabilität erreicht, während gleichzeitig die Schichten äußerst flexibel und damit Spannungsrisse fast ausgeschlossen sind. Durch die Wahl der Mischung von PFA und FEP anstelle der herkömmlichen Schicht aus PFA wird die kristalline Struktur der Schicht verändert, wodurch sich die herabgesetzte Permeabilität ergibt. Weiterhin wird der Schmelzpunkt bei entsprechender Wahl des Mischungsverhältnisses von 308°C (PFA) auf 297°C herabgesetzt, was Vorteile bei der Schichtaufbringung ergibt: Die Prozeßtemperatur wird geringer, wodurch sich die Gefahr der Bildung von Zersetzungsprodukten der Copolymere reduziert, und damit auch die Gefahr der Blasenbildung.

Die eingelagerten Kohlenstoff-Fasern dienen als Armierung und können Spannungen besser aufnehmen. Außerdem verringert sich der Schrumpf (abkühlungsbedingte Kontraktion des Materials) bei der Abkühlung. Der gesamte Schichtverbund ist nicht dicker - eher dünner - als herkömmliche Beschichtungen, jedoch wesentlich resistenter gegen chemisch aggressive Medien.

Das Vorsehen des genannten bevorzugten Schichtaufbaus lieferte im Vergleich mit den vorbekannten Beschichtungen eine Verbesserung - also Reduzierung - der Durchlässigkeit (Permeation) um den Faktor 3.

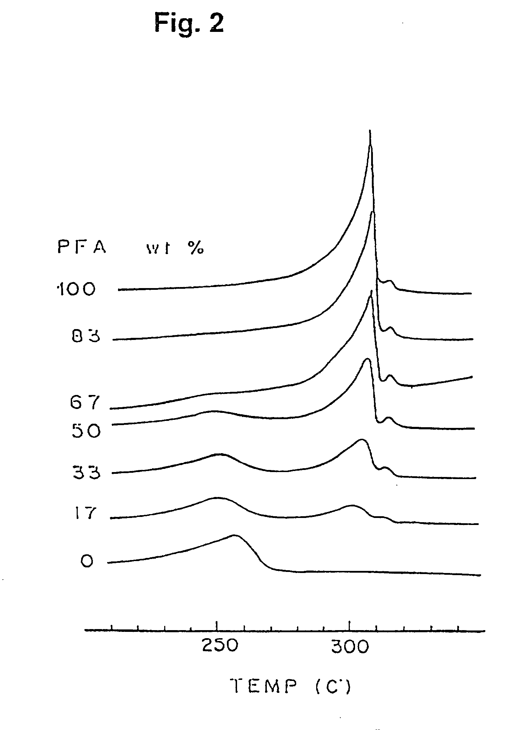

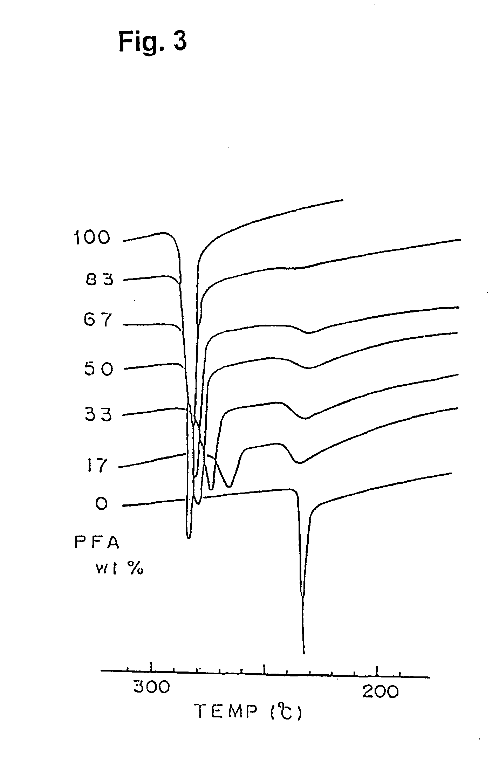

In den Figuren 2 und 3 ist zu sehen, wie sich das Schmelzverhalten der Schicht in Abhängigkeit vom Mischungsverhältnis von PFA und FEP ändert. Beide Figuren zeigen deutlich, wie sich der Schmelzpunkt verschiebt. Dieser Effekt kann genutzt werden, um das Beschichtungsverfahren zu optimieren. Wie aus der DE 36 28 670 C2 bekannt ist, spielt die Schmelztemperatur bei der Beschichtungstechnologie eine bedeutende Rolle. Durch die Auswahl eines entsprechenden Mischungsverhältnisses zwischen PFA und FEP wird es möglich, hierauf gezielt Einfluß zu nehmen.

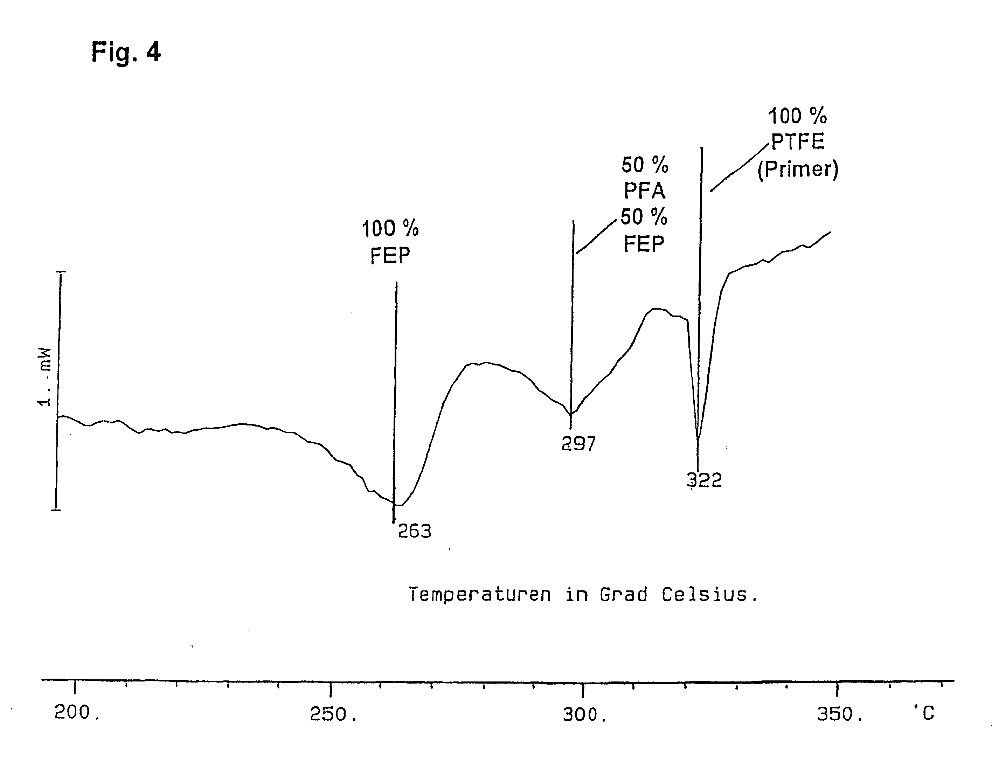

Ein ähnliches Bild ergibt sich auch aus der Fig. 4, die diese Situation nochmals darstellt. Dort ist insbesondere zu sehen, daß der Schmelzpunkt einer Mischung von 50 Gewichtsprozent PFA und 50 Gewichtsprozent FEP bei 297°C liegt. Dabei ist deutlich zu erkennen, daß sich die Kristallisationstemperatur von PFA deutlich verringert. Die exothermen Peaks von PFA und FEP werden breiter, was einen großen Einfluß auf die Kristallisationsrate hat.

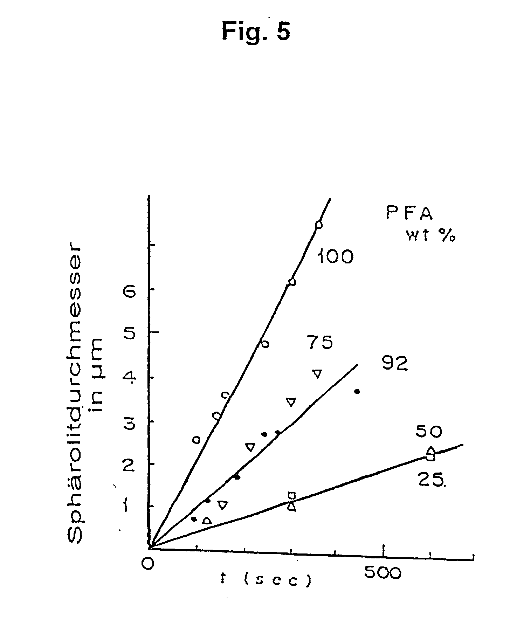

Weiterhin bedeutsam für die Eigenschaften insbesondere der zweiten Schicht hinsichtlich ihrer Permeabilität gegen aggressive chemische Substanzen ist der Durchmesser der sich ausbildenden Sphärolithe. Der Figur 5, die diese Verhältnisse zeigt, ist gut zu entnehmen, wie sich abhängig vom Mischungsverhältnis zwischen PFA und FEP über der Zeit die Durchmesser der Sphärolithe ausbilden. Die PFA-Kristalle werden wesentlich in ihrem Wachstum durch das Vorhandensein von FEP in der Mischung beeinflußt und gestört.

Es läßt sich somit feststellen, daß FEP und PFA kompatible Fluorthermoplaste sind, deren Kristallisationstemperatur beeinflußt, namentlich herabgesetzt, werden kann. Die Kristallisationsrate ist erheblich reduziert, ebenso der Grad der Kristallisation. Dies bedeutet jedoch für die Beschichtung, daß die Prozeßtemperatur herabgesetzt werden kann. Damit wird die Gefahr der Zusetzungsprodukte in den Polymeren verringert, d.h. das sog. Outgassing wird verringert. Weiterhin wird durch die niedrigere Kristallinität der Schrumpf der Mischung herabgesetzt, was niedrigere Schrumpfspannungen zur Folge hat. Dies macht sich besonders vorteilhaft an Ecken und Kanten sowie bei konvexen zu beschichtenden Geometrien bemerkbar.

## Patentansprüche

1. Hochtemperaturbeständiger Schichtverbund, bestehend aus
- einem beschichteten Grundmaterial (3), vorzugsweise aus Metall,
- mindestens einer auf dem Grundmaterial (3) mittelbar oder unmittelbar aufgebrachten ersten Schicht (1) aus Fluorthermoplast und
- mindestens einer weiteren auf der ersten Schicht (1) mittelbar oder unmittelbar aufgebrachten zweiten Schicht (2) aus Fluorthermoplast,
**dadurch gekennzeichnet,**
**daß** die erste Schicht (1) aus einer Mischung aus PFA und FEP besteht und die beiden Anteile aus PFA und FEP - abgesehen von geringfügigen Beimischungen - die wesentlichen Bestandteile der Mischung ausmachen, und **daß** die zweite Schicht (2) aus FEP besteht.

2. Schichtverbund nach Anspruch 1, **dadurch gekennzeichnet, daß** PFA mit einem Anteil von 20 bis 80 Gewichtsprozent und FEP mit einem Anteil von 80 bis 20 Gewichtsprozent verwendet werden.

3. Schichtverbund nach Anspruch 1 oder 2, **dadurch gekennzeichnet, daß** PFA eine Mischung aus Tetrafluorethylen mit einem Anteil von 92,0 bis 99,5 Gewichtsprozent und Fluorvenylether mit einem Anteil von 8,0 bis 0,5 Gewichtsprozent und FEP ein Tetrafluorethylen/Hexaflourpropylen-Copolymerisat ist.

4. Schichtverbund nach einem der Ansprüche 1 bis 3, **dadurch gekennzeichnet, daß** zwischen der ersten Schicht (1) und der zweiten Schicht (2) mindestens eine weitere Schicht (4, 5) aus einer Mischung aus PFA und FEP angeordnet ist.

5. Schichtverbund nach Anspruch 4, **dadurch gekennzeichnet, daß** PFA mit einem Anteil von 20 bis 80 Gewichtsprozent und FEP mit einem Anteil von 80 bis 20 Gewichtsprozent verwendet wird und die beiden Anteile aus PFA und FEP die wesentlichen Bestandteile der Mischung ausmachen.

6. Schichtverbund nach einem der Ansprüche 1 bis 5, **dadurch gekennzeichnet, daß** auf der zweiten Schicht (2) mindestens eine weitere Schicht (6, 7) aus FEP angeordnet ist.

7. Schichtverbund nach einem der Ansprüche 1 bis 6, **dadurch gekennzeichnet, daß** mindestens eine der Schichten (1, 2, 4, 5, 6, 7) zusätzlich mit hochbeständigen, anorganischen Additiven (K, G) versehen ist.

8. Schichtverbund nach Anspruch 7, **dadurch gekennzeichnet, daß** die hochbeständigen, anorganischen Additive (K, G) Kohlenstoff-Fasern (K) und/oder Glasflocken (Glasflakes G) und/oder Micaflakes sind.

9. Schichtverbund nach Anspruch 8, **dadurch gekennzeichnet, daß** die Kohlenstoff-Fasern (K) zwischen 50 bis 500 µm, vorzugsweise zwischen 100 und 200 µm, lang sind und einen Durchmesser von 5 bis 50 um, vorzugsweise von 10 bis 15 µm, haben.

10. Schichtverbund nach Anspruch 8 oder 9, **dadurch gekennzeichnet, daß** die Glasflocken (Glasflakes G) eine Dicke von 2 bis 30 µm, vorzugsweise von 5 bis 10 µm, und einen Durchmesser von 10 bis 100 µm, vorzugsweise von 30 bis 50 µm, haben.

11. Schichtverbund nach einem der Ansprüche 8 bis 10, **dadurch gekennzeichnet, daß** die Micaflakes eine Dicke von 1 bis 20 µm, vorzugsweise von 2 bis 10 µm, und einen Durchmesser von 20 bis 300 µm, vorzugsweise von 50 bis 150 µm, haben.

12. Schichtverbund nach einem der Ansprüche 7 bis 11, **dadurch gekennzeichnet, daß** ein hochbeständiges, anorganisches Additiv in Form von Kohlenstoff-Fasern (K) nur der ersten Schicht (1) oder den weiteren Schicht (4, 5) aus einer Mischung aus PFA und FEP beigegeben sind.

13. Schichtverbund nach einem der Ansprüche 7 bis 12, **dadurch gekennzeichnet, daß** ein hochbeständiges, anorganisches Additiv in Form Glasflocken (Glasflakes G) und/oder Micaflakes nur der zweiten Schicht (2) oder den weiteren Schichten (6, 7) aus FEP beigegeben sind.

14. Schichtverbund nach einem der Ansprüche 7 bis 11, **dadurch gekennzeichnet, daß** mindestens einer Schicht (5) sowohl Kohlenstoff-Fasern (K) als auch Glasflocken (Glasflakes G) bzw. Micaflakes beigegeben sind.

15. Schichtverbund nach einem der Ansprüche 8 bis 14, **dadurch gekennzeichnet, daß** die erste Schicht (1) mit Kohlenstoff-Fasern (K) in einem Anteil von 1 % bis 25 % versetzt ist.

16. Schichtverbund nach einem der Ansprüche 8 bis 15, **dadurch gekennzeichnet, daß** die zweite Schicht (2) mit Glasflakes und/oder Micaflakes versetzt ist.

17. Schichtverbund nach einem der Ansprüche 1 bis 16, **dadurch gekennzeichnet, daß** die oberste Schicht (7) des Schichtverbundes mit Pigmenten (P) versehen ist.

18. Schichtverbund nach Anspruch 17, **dadurch gekennzeichnet, daß** das Pigment (P) in einer Menge von 0,5 bis 5 Gewichtsprozent beigegeben wird.

19. Schichtverbund nach einem der Ansprüche 1 bis 18, **dadurch gekennzeichnet, daß** das Grundmaterial (3) vor dem Aufbringen der ersten Schicht (1) einer Sandstrahl- und/oder Flammspritzbehandlung unterzogen wird.

20. Schichtverbund nach einem der Ansprüche 1 bis 19, **dadurch gekennzeichnet, daß** auf das Grundmaterial (3) vor dem Aufbringen der ersten Schicht (1) ein Primer (Pr) aufgebracht wird.

## Claims

1. Laminate with high temperature stability, consisting of:
- a coated base material (3), preferably of metal
- at least one first layer (1) of fluorothermoplastic applied directly or indirectly to the base material (3)
- at least one further second layer (2) of fluorothermoplastic applied directly or indirectly to the first layer (1),
**characterized by**
the first layer (1) consisting of a mixture of PFA and FEP and both percentages being of PFA and FEP - apart from negligible admixtures - make up the main components of the mixture, and the second layer (2) consisting of FEP.

2. Laminate according to Claim 1, **characterized by** the PFA being used with a weight percentage of 20 to 80 and FEP with a weight percentage of 80 to 20.

3. Laminate according to Claim 1 or 2, **characterized by** the PFA being a mixture of tetrafluoroethylene with a weight percentage of 92.0 to 99.5 and fluorovinylether with a weight percentage of 8.0 to 0.5 and FEP being a tetrafluoroethylene/hexafluoropropylene copolymerisate.

4. Laminate according to one of Claims 1 to 3, **characterized by** at least one further layer (4, 5) of a mixture of PFA and FEP being arranged between the first layer (1) and the second layer (2).

5. Laminate according to Claim 4, **characterized by** PFA being used with a weight percentage of 20 to 80 and FEP with a weight percentage of 80 to 20 and that both percentages of PFA and FEP making up the main components of the mixture.

6. Laminate according to one of Claims 1 to 5, **characterized by** at least one further layer (6, 7) of FEP being arranged on the second layer (2).

7. Laminate according to one of Claims 1 to 6, **characterized by** at least one of the layers (1, 2, 4, 5, 6, 7) additionally being provided with highly stable, inorganic additives (K, G).

8. Laminate according to Claim 7, **characterized by** the highly stable, inorganic additives (K, G) being carbon fibres (K) and/or glass flakes (glass flakes G) and/or micaflakes.

9. Laminate according to Claim 8, **characterised by** the carbon fibres (K) being between 50 and 500 µm, preferably between 100 and 200 µm, in length and having a diameter of 5 to 50 µm, preferably of 10 to 15 µm.

10. Laminate according to Claim 8 or 9, **characterized by** the glass flakes (G) having a thickness of 2 to 30 µm, preferably of 5 to 10 µm, and a diameter of 10 to 100 µm, preferably of 30 to 50 µm.

11. Laminate according to one of Claims 8 to 10, **characterized by** the micaflakes having a thickness of 1 to 20 µm, preferably of 2 to 10 µm, and a diameter of 20 to 300 µm, preferably of 50 to 150 µm.

12. Laminate according to one of Claims 7 to 11, **characterized by** a highly stable, inorganic additive in the form of carbon fibres (K) being added only to the first layer (1) or to the further layers (4, 5) of a mixture of PFA and FEP.

13. Laminate according to one of Claims 7 to 12, **characterized by** a highly stable, inorganic additive in the form of glass flakes (G) and/or micaflakes being added only to the second layer (2) or to the further layers (6, 7) of FEP.

14. Laminate according to one of Claims 7 to 11, **characterized by** both carbon fibres (K) as well as glass flakes (G) or micaflakes being added to at least one layer (5).

15. Laminate according to one of Claims 8 to 14, **characterized by** the first layer (1) being mixed with carbon fibres (K) in a percentage of 1 % to 25 %.

16. Laminate according to one of Claims 8 to 15, **characterized by** the second layer (2) being mixed with glass flakes and/or micaflakes.

17. Laminate according to one of Claims 1 to 16, **characterized by** the top layer (7) of the laminate being provided with pigments (P).

18. Laminate according to Claim 17, **characterized by** the pigment (P) being added with a weight percentage of 0.5 to 5.

19. Laminate according to one of Claims 1 to 18, **characterized by** the base material (3) being subjected to sandblasting and/or flame spraying treatment prior to application of the first layer (1).

20. Laminate according to one of the Claims 1 to 19, **characterized by** a primer (Pr) being applied to the base material (3) prior to applying of the first layer (1).

## Revendications

1. Composite stratifié résistant aux hautes températures, composé :
- d'un matériau de base revêtu (3), de préférence en métal,
- d'au moins une première couche (1) en thermoplastique fluoré, appliquée directement ou indirectement sur le matériau de base (3), et
- d'au moins une autre seconde couche (2) en thermoplastique fluoré, appliquée directement ou indirectement sur la première couche (1),
**caractérisé en ce que** la première couche (1) se compose d'un mélange de PFA et de FEP, **en ce que** les deux fractions de PFA et de FEP - abstraction faite d'additifs insignifiants - forment les composantes essentielles du mélange, et **en ce que** la seconde couche (2) se compose de FEP.

2. Composite stratifié selon la revendication 1, **caractérisé en ce que** le PFA est utilisé selon une fraction comprise entre 20 et 80 pour-cent en masse et **en ce que** le FEP est utilisé selon une fraction comprise entre 80 et 20 pour-cent en masse.

3. Composite stratifié selon la revendication 1 ou 2, **caractérisé en ce que** le PFA est un mélange de tétrafluoroéthylène selon une fraction comprise entre 92,0 et 99,5 pour-cent en masse et de fluorovinyléther selon une fraction comprise entre 8,0 et 0,5 pour-cent en masse, et **en ce que** le FEP est un copolymère de tétrafluoroéthylène / hexafluoropropylène.

4. Composite stratifié selon l'une des revendications 1 à 3, **caractérisé en ce qu'**entre la première couche (1) et la seconde couche (2) est disposée au moins une autre couche (4, 5) composée d'un mélange de PFA et de FEP.

5. Composite stratifié selon la revendication 4, **caractérisé en ce que** le PFA est utilisé selon une fraction comprise entre 20 et 80 pour-cent en masse et le FEP selon une fraction comprise entre 80 et 20 pour-cent en masse, et **en ce que** les deux fractions de PFA et de FEP forment les composantes essentielles du mélange.

6. Composite stratifié selon l'une des revendications 1 à 5, **caractérisé en ce que** sur la seconde couche (2) est disposée au moins une autre couche (6, 7) en FEP.

7. Composite stratifié selon l'une des revendications 1 à 6, **caractérisé en ce qu'**au moins une des couches (1, 2, 4, 5, 6, 7) est en outre pourvue d'additifs inorganiques très résistants (K, G).

8. Composite stratifié selon la revendication 7, **caractérisé en ce que** les additifs inorganiques très résistants (K, G) sont des fibres de carbone (K) et/ou des paillettes ou copeaux de verre (glas flakes G) et/ou des paillettes ou copeaux de mica.

9. Composite stratifié selon la revendication 8, **caractérisé en ce que** les fibres de carbone (K) présentent une longueur comprise entre 50 et 500 µm, de préférence entre 100 et 200 µm, et un diamètre compris entre 5 et 50 µm, de préférence entre 10 et 15 µm.

10. Composite stratifié selon la revendication 8 ou 9, **caractérisé en ce que** les paillettes de verre (glas flakes G) présentent une épaisseur comprise entre 2 et 30 µm, de préférence entre 5 et 10 µm, et un diamètre compris entre 10 et 100 µm, de préférence entre 30 et 50 µm.

11. Composite stratifié selon l'une des revendications 8 à 10, **caractérisé en ce que** les paillettes de mica présentent une épaisseur comprise entre 1 et 20 µm, de préférence entre 2 et 10 µm, et un diamètre compris entre 20 et 300 µm, de préférence entre 50 et 150 µm.

12. Composite stratifié selon l'une des revendications 7 à 11, **caractérisé en ce qu'**un additif inorganique très résistant, sous la forme de fibres de carbone (K), est ajouté uniquement à la première couche (1) ou à la couche suivante (4, 5) composée d'un mélange de PFA et de FEP.

13. Composite stratifié selon l'une des revendications 7 à 12, **caractérisé en ce qu'**un additif inorganique très résistant, sous la forme de paillettes de verre (glas flakes G) et/ou de paillettes de mica, est ajouté uniquement à la seconde couche (2) ou à la couche suivante (6, 7) composée de FEP.

14. Composite stratifié selon l'une des revendications 7 à 11, **caractérisé en ce que** l'on ajoute à au moins une couche (5) tant des fibres de carbone (K) que de paillettes de verre (glas flakes G) ou des paillettes de mica.

15. Composite stratifié selon l'une des revendications 8 à 14, **caractérisé en ce que** la première couche (1) est mélangée à des fibres de carbone (K) selon une fraction comprise entre 1 % et 25 %.

16. Composite stratifié selon l'une des revendications 8 à 15, **caractérisé en ce que** la seconde couche (2) est mélangée à des paillettes de verre et/ou à des paillettes de mica.

17. Composite stratifié selon l'une des revendications 1 à 16, **caractérisé en ce que** la couche supérieure (7) du composite stratifié est pourvue de pigments (P).

18. Composite stratifié selon la revendication 17, **caractérisé en ce que** le pigment (P) est ajouté dans une quantité comprise entre 0,5 et 5 pour-cent en masse.

19. Composite stratifié selon l'une des revendications 1 à 18, **caractérisé en ce que** le matériau de base (3) est soumis, avant l'application de la première couche (1), à un traitement de sablage et/ou de pistolage à la flamme.

20. Composite stratifié selon l'une des revendications 1 à 19, **caractérisé en ce qu'**une couche d'apprêt (Pr) est appliquée sur le matériau de base (3) avant l'application de la première couche (1).
